# EUROPEAN PATENT SPECIFICATION

(11) **EP 4 140 097 B1**
(45) Date of publication and mention of the grant of the patent: **15.01.2025**
(21) Application number: 20720909.9
(22) Date of filing: 21.04.2020
(51) Int. Cl.: H04L 41/0803, H04L 41/08, G06F 3/16, H04L 41/084

(54) **INTENT FULFILLMENT FOR AUTOMATED CONTROL OF COMMUNICATION NETWORKS**
ABSICHTSERFÜLLUNG ZUR AUTOMATISIERTEN STEUERUNG VON KOMMUNIKATIONSNETZWERKEN
EXÉCUTION D'INTENTION POUR COMMANDE AUTOMATISÉE DE RÉSEAUX DE COMMUNICATION

(43) Date of publication of application: 01.03.2023
(73) Proprietor: Nokia Solutions and Networks Oy, 02610 Espoo (FI)
(72) Inventor: MWANJE, Stephen, 84405 Dorfen (DE)
(74) Representative: Script Intellectual Property LLP
(86) International application number: PCT/EP2020/061069
(87) International publication number: WO 2021/213632

(56) References cited:
- EP-A1- 3 553 710
- US-A1- 2016 241 436
- ARTHUR SELLE JACOBS ET AL: "Refining Network Intents for Self-Driving Networks", PROCEEDINGS OF THE AFTERNOON WORKSHOP ON SELF-DRIVING NETWORKS, 7 August 2018 (2018-08-07), New York, NY, USA, pages 15 - 21, XP055763224, ISBN: 978-1-4503-5914-6, DOI: 10.1145/3229584.3229590
- BARUN KUMAR SAHA ET AL: "Intent-based Networks", FUTURE INDUSTRIAL COMMUNICATION NETWORKS, ACM, 2 PENN PLAZA, SUITE 701NEW YORKNY10121-0701USA, 2 November 2018 (2018-11-02), pages 35 - 40, XP058418092, ISBN: 978-1-4503-5929-0, DOI: 10.1145/3243318.3243324
- ALEX GALIS (EDITOR) ET AL: "Network 2030 Management Architecture (contribution to Section 5 of the Architecture document);WG3-128", vol. net-2030, 20 March 2020 (2020-03-20), pages 1 - 18, XP044289507, Retrieved from the Internet <URL:https://extranet.itu.int/sites/itu-t/focusgroups/net-2030/subgroup3_workspace/NET2030_SG3_128_ManagementArchitecture_v2.1.docx> [retrieved on 20200320]
- CLEMM FUTUREWEI L CIAVAGLIA NOKIA L GRANVILLE A: "Intent-Based Networking - Concepts and Overview; draft-clemm-nmrg-dist-intent-02.txt", no. 2, 9 July 2019 (2019-07-09), pages 1 - 21, XP015134252, Retrieved from the Internet <URL:https://tools.ietf.org/html/draft-clemm-nmrg-dist-intent-02> [retrieved on 20190709]

## Description

### TECHNICAL FIELD

At least some embodiments relate to an apparatus and a method for intent fulfillment for automated control of communication networks.

In particular, at least some embodiments relate to Cognitive Autonomous Networks (CAN) in 5G (radio access) networks and other (future) generations of wireless/mobile networks and specifically, the use of intents in managing networks.

### BACKGROUND

Owing to the complexity of networks, there is always push for more automation and abstraction. One recent solution for the abstraction is through the use of intents in what may be termed Intent-Based Networking (IBN). Therein, the network should be able to respond to user's or operator's intents without the user/operator specifying the technical details of how his intended outcome may be realized. Although the IBN concept is widely discussed, it remains open how an intent may be fulfilled.

Reference [1] proposes an intent refinement process with a chatbot that is trained using machine learning to capture intents from Google^{®} assistant to assist non-expert users to configure their home networks. Mobile communication networks are however very complex to use a simple chatbot. A more comprehensive intent capture platform is required.

### LIST OF REFERENCES

[1] Arthur Selle Jacobs, Picardo Jose Pfitscher, Ronaldo Alves Ferreira, Lisandro Zambenedetti Granville, "Refining Network Intents for Self-Driving Networks", in Proceedings of ACM SIGCOMM 2018 Workshop on Self-Driving Networks, Budapest, Hungary, August 24, 2018 (SelfDN '18).
[2] Jorgensen, Niels Terp Kjeldgaard, Daniela Laselva, and Jeroen Wigard. "On the potentials of traffic steering techniques between HSDPA and LTE." 2011 IEEE 73rd Vehicular Technology Conference (VTC Spring). IEEE, 2011.

"Intent-based Networks" (BARUN KUMAR SAHA ET AL, FUTURE INDUSTRIAL COMMUNICATION NETWORKS, ACM, 2 PENN PLAZA, SUITE 701NEW YORKNY10121-0701USA, (20181102), doi:10.1145/3243318.3243324, ISBN 978-1-4503-5929-0, pages 35 - 40, XP058418092) identifes several use cases in the context of industrial networks that can potentially benefit from IBN.

EP3553710A1 discloses a system including multiple artificial intelligence skill agents that have each been trained to perform different actions in a telecommunications system. The system also includes an orchestrator agent that interacts with each of the artificial intelligence skill agents and coordinates which of the artificial intelligence agents performs actions in response to user inputs. The orchestrator agent receives a user input and determines an intent expressed by the user input. The orchestrator agent transmits an instruction to an artificial intelligence skill agent to perform an action that provides a response to the intent. In response to receiving the instruction from the orchestrator agent, the artificial intelligence skill agent performs the action when the artificial intelligence skill agent is capable of carrying out the action.

### LIST OF ABBREVIATIONS

- 5G: Fifth Generation
- CAN: Cognitive Autonomous Networks
- CF: Cognitive Function
- CLI: Command Line Interface
- CNM: Cognitive Network Management
- GUI: Graphical User Interface
- IBN: Intent-Based Networking
- IoT: Internet of Things
- KPI: Key Performance Indicator
- NE: Network Element
- NM: Network Management
- OAM: Operations, Administration and Management
- SON: Self-Organizing Network

### SUMMARY

At least some embodiments aim at overcoming the above drawbacks.

According to at least some embodiments, an apparatus and a method for fulfilling user or operator specified intents within automated control of communication networks are provided according to independent claims.

In the following, example embodiments and example implementations will be described with reference to the accompanying drawings.

### BRIEF DESCRIPTION OF THE DRAWINGS

Fig. 1 shows a schematic diagram illustrating a high-level intent system in which at least some example embodiments are implementable.
Fig. 2 shows a flowchart illustrating an intent fulfillment method according to at least some example embodiments.
Fig. 3 shows a schematic diagram illustrating an intent system comprising an intent fulfillment system which includes an intent-logic library and an intent-logic execution platform according to at least some example embodiments.
Fig. 4 shows a signaling diagram illustrating an intent fulfillment process according to at least some example embodiments.
Fig. 5 shows a schematic diagram illustrating a traffic steering feature or SON function.
Fig. 6 shows a schematic diagram illustrating an intent fulfillment system according to at least some example embodiments, when used for traffic steering.
Fig. 7 shows a schematic block diagram illustrating a configuration of a control unit in which at least some example embodiments are implementable.

### DESCRIPTION OF THE EMBODIMENTS

In the following, example embodiments and example implementations of an intent fulfillment system, an intent fulfillment apparatus and an intent fulfillment method will be described.

As mentioned above, in Intent-Based Networking (IBN), the network should be able to respond to user's or operator's intents without the user/operator specifying the technical details of how the intended outcome may be realized.

From an operator's perspective there can be very many kinds of intents, from simple intents that can be fulfilled with a single command sent to a specific network object to very complex intents that include multiple network nodes and several commands on several network objects. Example intents for example include:
1. Collect/get Carrier Aggregation statistics for all cells in city X.
2. Restrict/deny Handovers of high mobility users to small cells.
3. Allow load balancing to a cell Y or to small cells or to only urban cells.
4. Rehome a base station from controller A to controller B.

As stated above, in a typical communication network, there can be many kinds of intents. For an intent system, a means is required to fulfill an intent that is specified by an operator or system user.

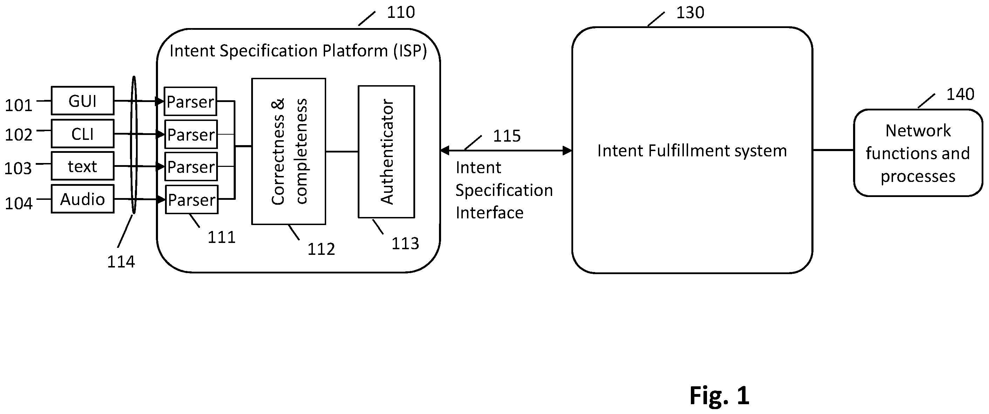

In general, and as illustrated in Fig. 1, a user has access to an intent specification platform (ISP) 110 of a high-level intent system. Using the ISP 110, the user specifies an intent to be executed.

The intent which regards control of communication networks is specified using a syntax which comprises at least a control object of the communication networks and a verb which indicates what action to do with the control object. For example, the syntax further comprises at least one of: a context and one or more parameters, wherein the context and the one or more parameters indicate with what parameters and under what conditions the action is to be done. For example, the syntax for specifying network control intents (e.g. network management intents) captures what needs to be done, where, with what parameters and under what conditions it should be done.

For example, the ISP 110 comprises interfaces 114 and mechanisms for submitting intents, e.g. GUI 101, CLI 102, means for inputting a text string 103 and/or means for inputting an audio command 104.

For example, the ISP 110 provides for mechanisms (e.g. parsers) 111 for recognizing and parsing user input for implicit intents into a network management intent, i.e. identifying the different fields in the input string/audio in line with the defined syntax. According to at least some embodiments, the input is received from different user interfaces 114 and mechanisms including CLI 102, GUI 101 (e.g. drop downs). The parsers 111 parse the input to identify the different intent-related fields therein that match the defined syntax.

For example, the ISP 110 comprises a mechanism 112 for enforcing syntax rules and checking for correctness and completeness of the specified intent, and an authenticator 113 to authenticate a user for the right to execute a specific intent.

For example, an intent specification interface 115 is used for exchanging information with an intent fulfillment system 130 e.g. to send an intent for execution to the intent fulfillment system 130 or to receive reports on the success of the execution from the intent fulfillment system 130. The intent fulfillment system 130 is connected to network functions and processes 140.

The outcome of the intent specification platform 110 will be a hash function that describes the intent to be fulfilled, similar to the hash function for specifying an intent indicated by Expression (1) below:

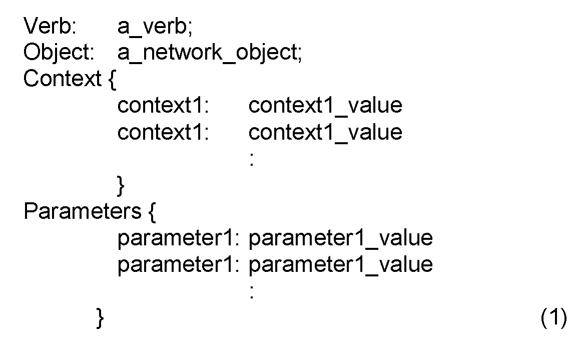

Such a hash function specifies the verb to be executed and the object on which it should be executed. For example, the hash function also includes the context and parameters as optional information. For example, for the intents 1-4 listed above, the intent specifications are similar to the entries in Table 1 as shown below, illustrating an example specification of network management intents.

**Table 1**

| Intent | | Verb | Object | Context | Parameters |
|---|---|---|---|---|---|
| 1. | Collect/get Carrier Aggregation statistics for all cells in city X. | Collect / get | all cells | city X | Carrier Aggregation statistics |
| 2. | Restrict/deny Handovers of high mobility users to small cells | Restrict / deny | small cells | high mobility users | Handovers |
| 3. | Allow load balancing to a cell Y or to small cells or to only urban cells | Allow | cell | Y / small cells / urban cells | load balancing |
| 4. | Rehome a base station from controller A to controller B. | Rehome | base station | | controller B |

### 1. Outline of Example Embodiments

According to at least some example embodiments, an apparatus and a method for fulfilling user or operator intents using Intent Logic Units (ILU) are provided. For example, the ILUs are stored in an Intent Logic Library (ILL).

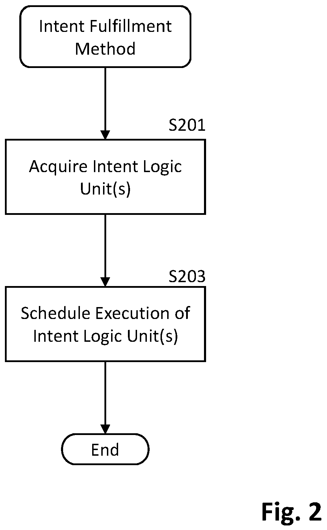

Fig. 2 shows a flowchart illustrating an intent fulfillment method according to at least some example embodiments.

At S201 of Fig. 2, for an intent to be executed, at least one intent logic unit (ILU) is acquired out of a plurality of intent logic units. For example, the plurality of ILUs is stored in an ILL. The intent regards control of communication networks. The intent logic units comprise logic or command sequences to be executed for achieving intents regarding control of the communication networks.

At S203, execution of the at least one intent logic unit is scheduled in order to activate actions according to the at least one intent logic unit on the communication networks. Then, the intent fulfillment method of Fig. 2 ends.

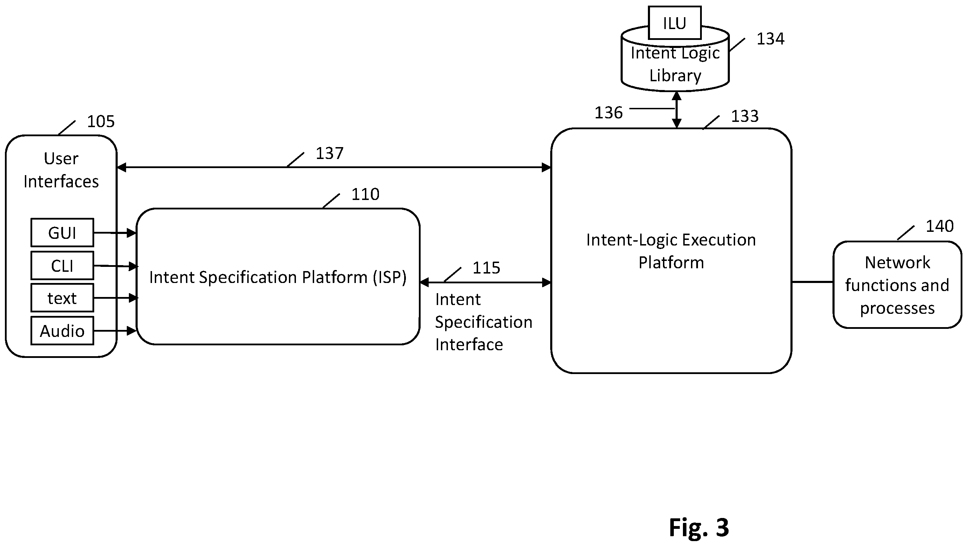

Fig. 3 illustrates an intent system comprising an intent fulfillment system which includes an intent-logic library (ILL) 134 and an intent-logic execution platform 133 according to at least some example embodiments.

According to at least some example embodiments, an apparatus for fulfilling user or operator intents comprises or is part of the intent-logic execution platform 133 which is connected to the ILL 134 via an interface 136.

According to an example implementation, the apparatus comprises the ILL. According to another example implementation, the ILL is provided separately from the apparatus.

The intent-logic execution platform 133 is connected to an ISP (e.g. the ISP shown in Fig. 1) 110 via interface 115, and with user interfaces 105 via an interface 137. For example, the user interfaces 105 comprise interfaces 101-104 shown in Fig. 1.

Further, the intent-logic execution platform 133 is connected to network functions and processes 140 of communication networks.

According to at least some example embodiments, an intent logic unit of the plurality of intent logic units is a wrapper around logic or command sequences required to be executed for achieving a specific intent regarding control of the communication networks (e.g. the network functions and processes 140). For example, each ILU is a wrapper around the logic or command sequences that need to be executed to achieve a specific intent.

According to at least some example embodiments, the intent logic unit comprises the logic or command sequences to be executed and further comprises at least one of an identifier, a name and a description which is understandable by a user. For example, each ILU is mandatorily characterized by: an identifier; a name and the logic or command sequences to be executed. For example, each ILU further has a description intended for human users who may either want to revise, reuse or remove the ILU.

According to at least some example embodiments, the scheduling execution at S203 in Fig. 2 comprises immediately executing the at least one intent logic unit, or executing the at least one intent logic unit at a later time.

According to at least some example embodiments, the acquiring at S201 in Fig. 2 comprises searching the above-mentioned intent logic library 134 storing the plurality of intent logic units to find the at least one intent logic unit comprising logic or command sequences to be executed for achieving the intent. For example, the ILL 134 is a database/catalogue of ILUs that can be searched to find the appropriate ILU for a given intent.

According to at least some example embodiments, the method illustrated in Fig. 2 further comprises, following S203, checking if the intent has been fulfilled by its execution. In case the intent has not been fulfilled, the at least one intent logic unit is deleted from the intent logic library 134.

According to at least some example embodiments, at S201 in Fig. 2, for the intent to be executed, two or more intent logic units are acquired out of the plurality of intent logic units, and the two or more intent logic units are combined into another intent logic unit comprising logic or command sequences to be executed for achieving the intent. Then, at S203, execution of the other intent logic unit is scheduled for activating the other intent logic unit on the communication networks.

According to at least some example embodiments, the method illustrated in Fig. 2 further comprises, following S203, checking if the intent has been fulfilled by its execution. In case the intent has been fulfilled, the other intent logic unit is added to the intent logic library 134.

According to at least some example embodiments, the method illustrated in Fig. 2 is implemented in the intent-logic execution platform 133. For example, intent execution is fulfilled via the Intent-Logic Execution Platform (ILEP) 133 that identifies the appropriate logic and executes it onto the network or its objects.

According to at least some example embodiments, at least some of the plurality of intent logic units are manually written intent logic units. For example, ILUs are written manually by a system manufacturer and operators.

According to at least some example embodiments, at least some of the plurality of intent logic units are learned intent logic units. For example, ILUs are learned by the system illustrated in Fig. 3.

According to at least some example embodiments, S201 of Fig. 2 comprises sending at least one message towards a user.

According to at least some example embodiments, S203 of Fig. 2 comprises sending at least one message to the communication networks.

According to at least some example embodiments, the method of Fig. 2 further comprises receiving at least one message from the communication networks.

According to at least some example embodiments, the at least one message sent towards the user indicates that the intent to be executed is incomplete or incorrect.

According to at least some example embodiments, the at least one message sent towards the user indicates success or failure of the execution of the intent.

According to at least some example embodiments, the at least one message sent towards the user indicates failure of the execution of the intent including a reason for the failure.

According to at least some example embodiments, the at least one message sent to the communication networks causes execution of the actions according to the at least one intent logic unit on the communication networks.

According to at least some example embodiments, the at least one message received from the communication networks indicates success or failure of the execution of the intent.

According to at least some example embodiments, the at least one message received from the communication networks indicates failure of the execution of the intent including a reason for the failure.

For example, messages are sent by the ILEP 133 to fulfil different aspects of the intent fulfillment method. Among these are messages sent to the network functions 140, e.g. to execute the intent, and to the user e.g. via interface 137, e.g. for response regarding syntax problems, or responses on success /failure of the intent execution with a respective reason where applicable.

For example, messages are received by the ILEP 133 to fulfil the aspects of the intent fulfillment method. Among these are messages received from the network functions regarding the success /failure of intent execution with the respective reason where applicable.

### 2. Detailed Description of Example Embodiments and Example Implementations

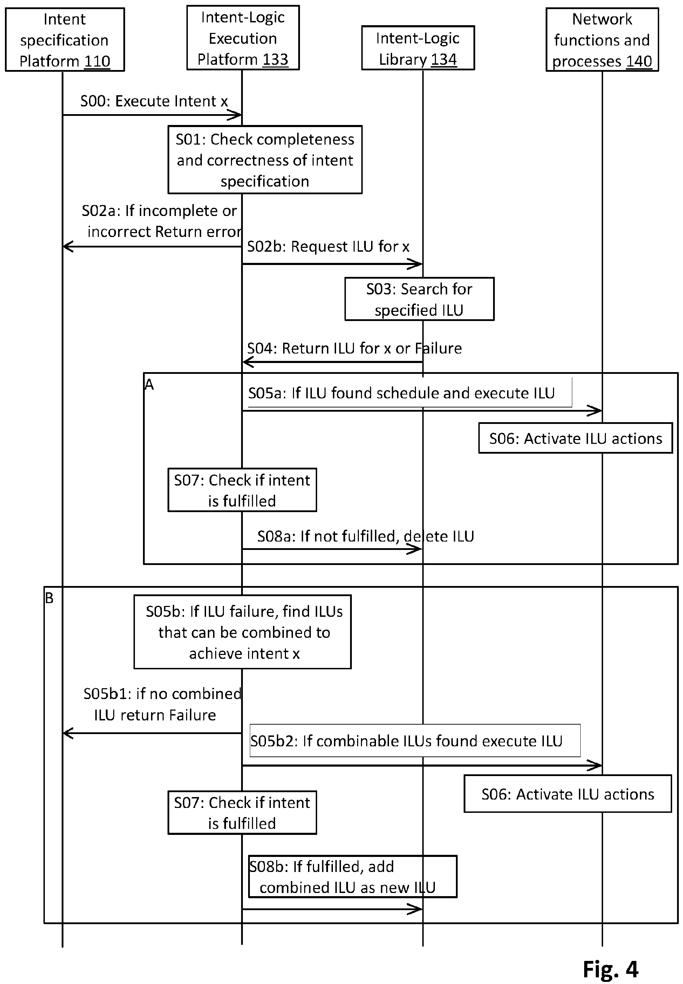

Fig. 4 shows a signaling diagram illustrating an intent fulfillment process according to at least some example embodiments.

Signaling in Fig. 4 is performed between ISP 110, ILEP 133, ILL 134 and network functions and processes 140, such as depicted in Fig. 3, for example.

At S00, the ILEP 133 receives a message from the ISP 110 e.g. via interface 115, the message indicating that an intent x shall be executed. The intent x is specified as hash function as indicated by Expression (1) above.

At S01, the ILEP 133 checks completeness and correctness of the specification of intent x. For example, the ILEP confirms that for a verb stated in the specification of intent x applicable context and parameters are supplied.

At S02a, in case an inconsistence is found at S01, the ILEP 133 informs the ISP 110 by returning a message to the ISP 110 e.g. via interface 115, which indicates an error. Otherwise, at S02b, the ILEP 133, in a message sent to the ILL 134 via interface 136, requests an ILU for intent x from the ILL 134.

At S03, the ILL 134 searches for an ILU that matches the specification of intent x.

At S04, if an ILU matching the specification of intent x is found in the ILL 134, in a message sent via interface 136, the ILL 134 returns this ILU to the ILEP 133. Otherwise, at S04, in a message sent via interface 136, the ILL 134 returns a failure event to the ILEP 133.

At S05a, if the ILU matching the specification of intent x is found in the ILL 134, the ILEP 133 schedules execution of the ILU for activating actions according to the ILU on the network functions and processes 140. For example, the ILEP 133 checks if the ILU can be immediately executed or if it has to wait and must be scheduled at a different time. The ILEP 133 schedules execution of the ILU by sending a message to the network functions and processes 140.

At S06 following S05a, the ILU found in the ILL 134 is activated on the network functions and processes 140.

At S07, the ILEP 133 evaluates the outcome of the ILU activation to confirm that the intent is achieved.

At S08a, if the ILU obtained from the ILL 134 does not fulfill the intent x, the ILEP 133 deletes this ILU from the ILL 134 or marks it as ineffective, by sending a message via interface 136.

Above described procedures S05a, S06, S07 and S08a form a process flow A.

At S05b, if an ILU matching the specification of intent x is not found in the ILL 134, the ILEP 133 determines which ILUs (e.g. ILUs stored in the ILL 134) can be combined to achieve intent x.

At S05b1, if such combined ILU cannot be constructed the ILEP 133 returns an execution failure to the ISP 110 by sending a message via interface 115. Otherwise, if such combined ILU can be constructed, at S05b2, the ILEP 133 schedules its execution by sending a message to the network functions and processes 140.

At S06 following S05b2, the combined ILU is activated on the network functions and processes 140.

At S07, the ILEP 133 evaluates the outcome of the combined ILU activation to confirm that the intent is achieved.

At S08b, if the combined ILU is applied and intent x is achieved, the ILEP 133 adds the combined ILU to the ILL 134 as new ILU for intent x, by sending a message via interface 136.

Above described procedures S05b, S05b1, S05b2, S06, S07 and S08b form a process flow B.

### 3. Example Application

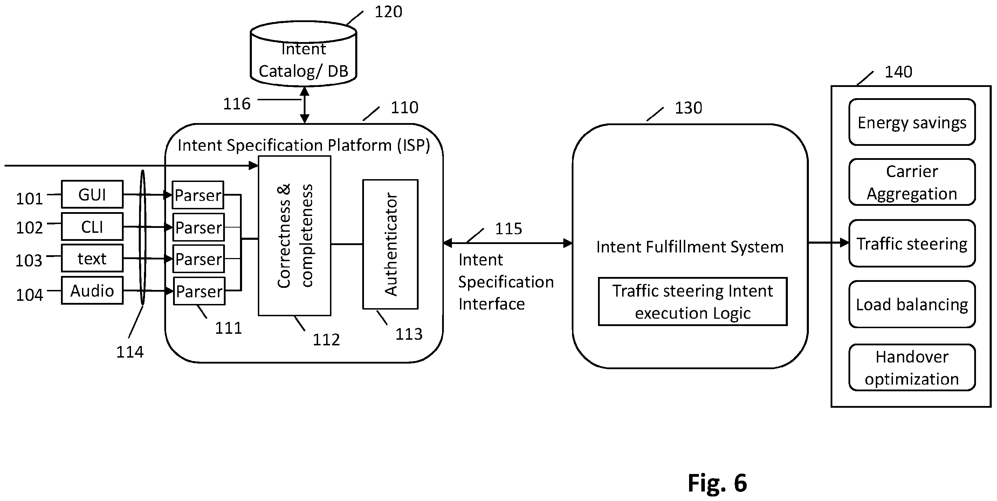

As example application of an intent fulfillment system 130 according to at least some example embodiments, as illustrated in Fig. 6 to be described later on, the operator wishes to adjust Traffic Steering (TS) characteristics and/ or behavior (see reference [2] for a discussion on TS). This example assumes that there are other automation functions alongside TS, including energy saving, carrier aggregation, etc., as indicated by block 140 in Fig. 6.

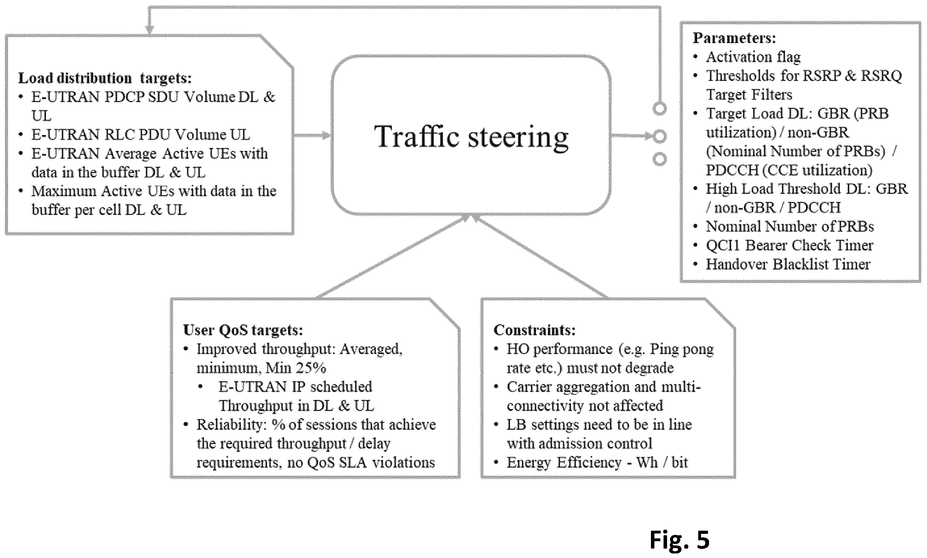

The traffic steering feature, as summarized by Fig. 5, is very complicated, so it is a good candidate for intent based network control operations. The operator may wish to readjust the traffic steering behavior without looking into the specific details and options of the traffic steering feature(s). The configuration options are too many and complicated, so the intent-based control should abstract the complexity and simplify the operator actions through the intent system comprising an ISP 110 and the intent fulfillment system 130 according to at least some example embodiments. For example, the intent fulfillment system 130 shown in Fig. 6 comprises the ILEP 133 and the ILL 134 of Fig. 3.

In general, traffic steering related intents rely on multiple automation/SON or network functions as represented by Fig. 6. It is noted that in Fig. 6 similar reference signs are used to refer to elements similar to those shown in Fig. 1. In particular, the intent fulfillment system 130 comprises traffic steering intent execution logic. Network functions and processes 140 comprise energy savings, carrier aggregation, traffic steering, load balancing and handover optimization.

For example, three traffic steering-related intents are defined and utilized:
1) In a city's dense urban central business district the interest is to allow for specifying very strict outcomes.
2) For a rural environment, it is desired to empty a specific traffic layer to allow for energy savings to deactivate those cells.
3) Semi urban environment on the other hand requires a flexible TS regime, i.e., where the TS behavior is adjustable to allow for multiple compromises.

For example, the corresponding TS related intents, respectively called Urban_TS, ESM_TS and Flexible_TS, then are described as follows:
1. Urban_TS: Enforce very strict traffic steering regime that ensures that the load is always balanced to within less than 5% difference between two traffic layers.
2. Energy saving TS (ESM_TS): Empty cell layer z of any traffic.
3. Flexible_TS: Revise TS behavior to reduce effects on mobility performance by amount x%.

Given the above description, example specifications according to the vocabulary of the ISP 110 for the three intents are as described by Table 2 which indicates elements of intent instances in intent catalogue 120:

**Table 2**

| Action | Urban TS, | ESM TS | Flexible TS |
|---|---|---|---|
| Declaration | Create_intent Urban_TS { *change* Multi-RAT HO settings; all_cells_in CBD; L1 High_Load threshold 75%; L2_High_Load_threshold 80%" } | Create_intent ESM_TS { *change* Multi-RAT HO settings; any_cell; L1 High_Load threshold 0%; } | Create intent Flexible_TS { *change* Multi-RAT HO settings; any_cell; *reduce all* HO metrics by x% } |

As shown in Table 2, as "action", the intents "Urban_TS", "ESM_TS" and "Flexible_TS" are declared as specifications according to the vocabulary of the ISP 110.

The contents of these specifications are then the ILUs which are stored in the ILL 134, and are to be executed when called by the ILEP 133. For example, the ILUs are described as shown in Table 3 illustrating example ILUs for the three TS regimes:

**Table 3**

| TS Regime | ILU to be executed | Call to execute ILU | Interpretation of call |
|---|---|---|---|
| Urban_TS | *change* Multi-RAT HO settings; all_cells_in CBD; L1 High_Load threshold 75%; L2_High_Load_threshold 80%" | *Change* TS cell x to urban | Ensure that for the cell x the TS setting match an urban cell |
| | | *Set cell x to urban cell* | With x set as an urban cell, the traffic steering characteristics should match those of an urban cell, so Urban _TS should be executed on cell x |
| ESM_TS | *change* Multi-RAT HO settings; any_cell; L1 High_Load threshold 0%; | *Change* TS cell x to urban | Ensure that for the cell x the TS setting match an urban cell |
| | | *Change* TS cell x to rural | Set TS to prioritize ESM against overload for cell x |
| Flexible_TS | *change* Multi-RAT HO settings; any_cell; *reduce all* HO metrics by 2% | *Change* TS cell x to urban | |

According to Table 3, the ILUs to be executed for the intents "Urban_TS" and "ESM_TS" are called by the ILEP 133 in case a TS cell x is changed to urban to ensure that for the TS cell x the TS setting matches an urban cell.

Further, the ILU to be executed for the intent "Urban_TS" is called by the ILEP 133 in case a cell x is set to an urban cell. With x set as an urban cell, the traffic steering characteristics should match those of an urban cell, so Urban_TS should be executed on cell x.

The ILU to be executed for the intent "ESM_TS" is called by the ILEP 133 in case a TS cell x is changed to rural to set TS to prioritize ESM against overload for cell x.

The ILU to be executed for the intent "Flexible_TS" is called by the ILEP 133 in case a TS cell x is changed to urban.

### 4. Advantages

The intent fulfillment system 130, in particular the ILEP 133, allows network operators to run their intents without having to specify the details on how those intents should be fulfilled. The intent fulfillment system 130, in particular the ILEP 133, allows intents specified on one vendor's system to be executed or fulfilled on another vendor's system using a simple interface between the two systems.

### 5. Further Embodiments

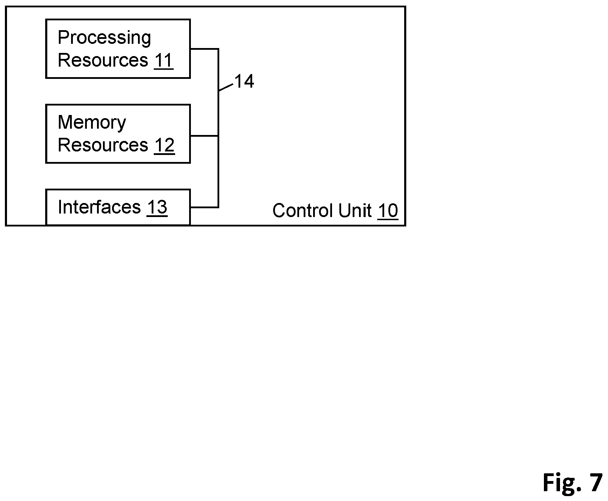

Now reference is made to Fig. 7, illustrating a simplified block diagram of a control unit 10 that is suitable for use in practicing at least some of the example embodiments.

According to at least some example embodiments, the control unit 10 implements at least one of hardware, software and firmware of the above-described intent fulfillment apparatus, e.g. the ILEP 133, and intent fulfillment method, e.g. the method shown in Fig. 2.

The control unit 10 comprises processing resources (e.g. processing circuitry) 11, memory resources (e.g. memory circuitry) 12 and interfaces (e.g. interface circuitry) 13, connected via a link 14. At least some embodiments are implemented by the memory resources 12 storing a program which is executable by the processing resources 11.

The terms "connected," "coupled," or any variant thereof, mean any connection or coupling, either direct or indirect, between two or more elements, and, according to at least some embodiments, encompass the presence of one or more intermediate elements between two elements that are "connected" or "coupled" together. The coupling or connection between the elements can be physical, logical, or a combination thereof. As employed herein two elements are considered to be "connected" or "coupled" together by the use of one or more wires, cables and printed electrical connections, as well as by the use of electromagnetic energy, such as electromagnetic energy having wavelengths in the radio frequency region, the microwave region and the optical (both visible and invisible) region, as non-limiting examples.

Further, as used in this application, the term "circuitry" refers to one or more or all of the following:
(a) hardware-only circuit implementations (such as implementations in only analog and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and
(c) to circuits, such as a microprocessor(s) or a portion of a microprocessor(s), that require software or firmware for operation, even if the software or firmware is not physically present.

This definition of "circuitry" applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in server, a cellular network device, or other network device.

According to at least some example embodiments, an apparatus is provided which comprises, for an intent to be executed, means for acquiring at least one intent logic unit out of a plurality of intent logic units, wherein the intent regards control of communication networks, and wherein the intent logic units comprise logic or command sequences to be executed for achieving intents regarding control of the communication networks, and means for scheduling execution of the at least one intent logic unit for activating actions according to the at least one intent logic unit on the communication networks.

According to an example implementation, the apparatus executed the method illustrated in Fig. 2. Alternatively or in addition, the apparatus comprises and/or uses the control unit shown in Fig. 7.

According to at least some example embodiments, the means for scheduling execution comprises means for immediately executing the at least one intent logic unit, or means for executing the at least one intent logic unit at a later time.

According to at least some example embodiments, the means for acquiring comprises means for searching an intent logic library storing the plurality of intent logic units to find the at least one intent logic unit comprising logic or command sequences to be executed for achieving the intent.

According to at least some example embodiments, the apparatus further comprises means for checking if the intent has been fulfilled by its execution, and means for, in case the intent has not been fulfilled, deleting the at least one intent logic unit from the intent logic library.

According to at least some example embodiments, the apparatus further comprises means for, for the intent to be executed, acquiring two or more intent logic units out of the plurality of intent logic units, and means for combining the two or more intent logic units into another intent logic unit comprising logic or command sequences to be executed for achieving the intent, wherein the means for scheduling execution comprises means for scheduling execution of the other intent logic unit for activating the other intent logic unit on the communication networks.

According to at least some example embodiments, the apparatus further comprises means for checking if the intent has been fulfilled by its execution, and means for, in case the intent has been fulfilled, adding the other intent logic unit to the intent logic library.

According to at least some example embodiments, the apparatus comprises an intent-logic execution platform.

According to at least some example embodiments, the means for acquiring comprises means for sending at least one message towards a user.

According to at least some example embodiments, the means for scheduling execution comprises means for sending and/or receiving at least one message to/from the communication networks.

## Claims

1. An apparatus comprising at least one processor and at least one memory including computer program code, the at least one memory and the computer program code configured to, with the at least one processor, cause the apparatus at least to perform:
for an intent to be executed, acquiring at least one intent logic unit out of a plurality of intent logic units, wherein the intent regards control of communication networks, and wherein the intent logic units comprise logic or command sequences to be executed for achieving intents regarding control of the communication networks;
scheduling execution of the at least one intent logic unit for activating actions according to the at least one intent logic unit on the communication networks, and
the apparatus being **characterized in that**: wherein the at least one memory and the computer program code are configured to, with the at least one processor, cause the apparatus to further perform:
for the intent to be executed, acquiring two or more intent logic units out of the plurality of intent logic units, and combining the two or more intent logic units into another intent logic unit comprising logic or command sequences to be executed for achieving the intent;
wherein the scheduling execution comprises:
scheduling execution of the other intent logic unit for activating the other intent logic unit on the communication networks;
checking if the intent has been fulfilled by its execution; and
in case the intent has been fulfilled, adding the other intent logic unit to an intent logic library (134).

2. The apparatus of claim 1, wherein an intent logic unit of the plurality of intent logic units is a wrapper around logic or command sequences required to be executed for achieving a specific intent regarding control of the communication networks.

3. The apparatus of claim 2, wherein the intent logic unit comprises the logic or command sequences to be executed and further comprises at least one of an identifier, a name and a description which is understandable by a user.

4. The apparatus of any one of claims 1 to 3, the scheduling execution comprising:
immediately executing the at least one intent logic unit, or
executing the at least one intent logic unit at a later time.

5. The apparatus of any one of claims 1 to 4, the acquiring comprising: searching the intent logic library storing the plurality of intent logic units to find the at least one intent logic unit comprising logic or command sequences to be executed for achieving the intent.

6. The apparatus of claim 5, wherein the at least one memory and the computer program code are configured to, with the at least one processor, cause the apparatus to further perform:
checking if the intent has been fulfilled by its execution; and
in case the intent has not been fulfilled, deleting the at least one intent logic unit from the intent logic library.

7. The apparatus of any one of claims 1 to 6, wherein the apparatus comprises an intent-logic execution platform (133).

8. The apparatus of any one of claims 1 to 7, wherein
at least some of the plurality of intent logic units are manually written intent logic units, and/or
at least some of the plurality of intent logic units are learned intent logic units.

9. The apparatus of any one of claims 1 to 8, wherein
the acquiring comprises sending at least one message towards a user; and/or
the scheduling execution comprising sending and/or receiving at least one message to/from the communication networks.

10. The apparatus of claim 9, wherein
the at least one message sent towards the user indicates that the intent to be executed is incomplete or incorrect, and/or
the at least one message sent towards the user indicates success or failure of the execution of the intent, and/or
the at least one message sent towards the user indicates failure of the execution of the intent including a reason for the failure, and/or
the at least one message sent to the communication networks causes execution of the actions according to the at least one intent logic unit on the communication networks, and/or
the at least one message received from the communication networks indicates success or failure of the execution of the intent, and/or
the at least one message received from the communication networks indicates failure of the execution of the intent including a reason for the failure.

11. The apparatus of any one of claims 1 to 10, wherein the intent is specified using a syntax which comprises at least a control object of the communication networks and a verb which indicates what action to do with the control object.

12. The apparatus of claim 11, wherein the syntax further comprises at least one of: a context and one or more parameters, wherein the context and the one or more parameters indicate with what parameters and under what conditions the action is to be done.

13. A method comprising:
for an intent to be executed, acquiring (S201) at least one intent logic unit out of a plurality of intent logic units, wherein the intent regards control of communication networks, and wherein the intent logic units comprise logic or command sequences to be executed for achieving intents regarding control of the communication networks;
scheduling (S203) execution of the at least one intent logic unit for activating actions according to the at least one intent logic unit on the communication networks, and
the method being **characterized by** that: the method further comprising:
for the intent to be executed, acquiring two or more intent logic units out of the plurality of intent logic units, and combining the two or more intent logic units into another intent logic unit comprising logic or command sequences to be executed for achieving the intent,
wherein the scheduling execution comprises:
scheduling execution of the other intent logic unit for activating the other intent logic unit on the communication networks;
checking if the intent has been fulfilled by its execution; and
in case the intent has been fulfilled, adding the other intent logic unit to an intent logic library.

## Patentansprüche

1. Vorrichtung, die mindestens einen Prozessor und mindestens einen Speicher umfasst, der Computerprogrammcode beinhaltet, wobei der mindestens eine Speicher und der Computerprogrammcode dazu ausgelegt sind, die Vorrichtung mit dem mindestens einen Prozessor zu veranlassen, mindestens Folgendes durchzuführen:
Erfassen von mindestens einer Absichtslogikeinheit einer Vielzahl von Absichtslogikeinheiten für eine auszuführende Absicht, wobei sich die Absicht auf eine Steuerung von Kommunikationsnetzwerken bezieht, und wobei die Absichtslogikeinheiten Logik- oder Befehlssequenzen umfassen, die zum Erreichen von Absichten, die sich auf eine Steuerung der Kommunikationsnetzwerke beziehen, auszuführen sind;
Planen einer Ausführung der mindestens einen Absichtslogikeinheit zum Aktivieren von Aktionen gemäß der mindestens einen Absichtslogikeinheit in den Kommunikationsnetzwerken, und
wobei die Vorrichtung **dadurch gekennzeichnet ist, dass**: wobei der mindestens eine Speicher und der Computerprogrammcode dazu ausgelegt sind, die Vorrichtung mit dem mindestens einen Prozessor zu veranlassen, ferner Folgendes durchzuführen:
Erfassen von zwei oder mehr Absichtslogikeinheiten der Vielzahl von Absichtslogikeinheiten für die auszuführende Absicht und Kombinieren der zwei oder mehr Absichtslogikeinheiten zu einer weiteren Absichtslogikeinheit, die Logik- oder Befehlssequenzen umfasst, die zum Erreichen der Absicht auszuführen sind;
wobei das Planen einer Ausführung Folgendes umfasst:
Planen einer Ausführung der weiteren Absichtslogikeinheit zum Aktivieren der weiteren Absichtslogikeinheit in den Kommunikationsnetzwerken;
Prüfen, ob die Absicht durch deren Ausführung erfüllt wurde; und
in dem Fall, in dem die Absicht erfüllt wurde, Hinzufügen der weiteren Absichtslogikeinheit zu einer Absichtslogikbibliothek (134).

2. Vorrichtung nach Anspruch 1, wobei eine Absichtslogikeinheit der Vielzahl von Absichtslogikeinheiten eine Hülle um Logik- oder Befehlssequenzen ist, die zum Erreichen einer spezifischen Absicht mit Bezug auf eine Steuerung der Kommunikationsnetzwerke auszuführen sind.

3. Vorrichtung nach Anspruch 2, wobei die Absichtslogikeinheit die auszuführenden Logik- oder Befehlssequenzen umfasst und ferner mindestens eines von einer Kennung, einem Namen und einer Beschreibung, die von einem Benutzer verstehbar ist, umfasst.

4. Vorrichtung nach einem der Ansprüche 1 bis 3, wobei das Planen einer Ausführung Folgendes umfasst:
sofortiges Ausführen der mindestens einen Absichtslogikeinheit, oder
Ausführen der mindestens einen Absichtslogikeinheit zu einer späteren Zeit.

5. Vorrichtung nach einem der Ansprüche 1 bis 4, wobei das Erfassen Folgendes umfasst:
Durchsuchen der Absichtslogikbibliothek, in der die Vielzahl von Absichtslogikeinheiten gespeichert sind, um die mindestens eine Absichtslogikeinheit zu finden, die Logik- oder Befehlssequenzen umfasst, die zum Erreichen der Absicht auszuführen sind.

6. Vorrichtung nach Anspruch 5, wobei der mindestens eine Speicher und der Computerprogrammcode dazu ausgelegt sind, die Vorrichtung mit dem mindestens einen Prozessor zu veranlassen, ferner Folgendes durchzuführen:
Prüfen, ob die Absicht durch deren Ausführung erfüllt wurde; und
in dem Fall, in dem die Absicht nicht erfüllt wurde, Löschen der mindestens einen Absichtslogikeinheit aus der Absichtslogikbibliothek.

7. Vorrichtung nach einem der Ansprüche 1 bis 6, wobei die Vorrichtung eine Absichtslogikausführungsplattform (133) umfasst.

8. Vorrichtung nach einem der Ansprüche 1 bis 7, wobei
mindestens einige der Vielzahl von Absichtslogikeinheiten manuell geschriebene Absichtslogikeinheiten sind, und/oder
mindestens einige der Vielzahl von Absichtslogikeinheiten gelernte Absichtslogikeinheiten sind.

9. Vorrichtung nach einem der Ansprüche 1 bis 8, wobei
das Erfassen das Senden von mindestens einer Nachricht an einen Benutzer umfasst; und/oder
das Planen einer Ausführung das Senden und/oder Empfangen von mindestens einer Nachricht an die Kommunikationsnetzwerke bzw. von denselben umfasst.

10. Vorrichtung nach Anspruch 9, wobei
die mindestens eine Nachricht, die an den Benutzer gesendet wird, anzeigt, dass die auszuführende Absicht unvollständig oder falsch ist, und/oder
die mindestens eine Nachricht, die an den Benutzer gesendet wird, einen Erfolg oder ein Scheitern der Ausführung der Absicht anzeigt, und/oder
die mindestens eine Nachricht, die an den Benutzer gesendet wird, ein Scheitern der Ausführung der Absicht einschließlich eines Grundes für das Scheitern anzeigt, und/oder
die mindestens eine Nachricht, die an die Kommunikationsnetzwerke gesendet wird, eine Ausführung der Aktionen gemäß der mindestens einen Absichtslogikeinheit in den Kommunikationsnetzwerken veranlasst, und/oder
die mindestens eine Nachricht, die von den Kommunikationsnetzwerken empfangen wird, einen Erfolg oder ein Scheitern der Ausführung der Absicht anzeigt, und/oder
die mindestens eine Nachricht, die von den Kommunikationsnetzwerken empfangen wird, ein Scheitern der Ausführung der Absicht einschließlich eines Grundes für das Scheitern anzeigt.

11. Vorrichtung nach einem der Ansprüche 1 bis 10, wobei die Absicht unter Verwendung einer Syntax, die mindestens ein Steuerobjekt der Kommunikationsnetzwerke umfasst, und eines Verbs, das anzeigt, welche Aktion mit dem Steuerobjekt vorzunehmen ist, spezifiziert wird.

12. Vorrichtung nach Anspruch 11, wobei die Syntax ferner mindestens eines von Folgendem umfasst: einen Kontext und einen oder mehrere Parameter, wobei der Kontext und der eine oder die mehreren Parameter anzeigen, mit welchen Parametern und unter welchen Bedingungen die Aktion vorzunehmen ist.

13. Verfahren, das Folgendes umfasst:
Erfassen (S201) von mindestens einer Absichtslogikeinheit einer Vielzahl von Absichtslogikeinheiten für eine auszuführende Absicht, wobei sich die Absicht auf eine Steuerung von Kommunikationsnetzwerken bezieht, und wobei die Absichtslogikeinheiten Logik- oder Befehlssequenzen umfassen, die zum Erreichen von Absichten, die sich auf eine Steuerung der Kommunikationsnetzwerke beziehen, auszuführen sind;
Planen (S203) einer Ausführung der mindestens einen Absichtslogikeinheit zum Aktivieren von Aktionen gemäß der mindestens einen Absichtslogikeinheit in den Kommunikationsnetzwerken, und
wobei das Verfahren **dadurch gekennzeichnet ist, dass**: wobei das Verfahren ferner Folgendes umfasst:
Erfassen von zwei oder mehr Absichtslogikeinheiten der Vielzahl von Absichtslogikeinheiten für die auszuführende Absicht und Kombinieren der zwei oder mehr Absichtslogikeinheiten zu einer weiteren Absichtslogikeinheit, die Logik- oder Befehlssequenzen umfasst, die zum Erreichen der Absicht auszuführen sind,
wobei das Planen einer Ausführung Folgendes umfasst:
Planen einer Ausführung der weiteren Absichtslogikeinheit zum Aktivieren der weiteren Absichtslogikeinheit in den Kommunikationsnetzwerken;
Prüfen, ob die Absicht durch deren Ausführung erfüllt wurde; und
in dem Fall, in dem die Absicht erfüllt wurde, Hinzufügen der weiteren Absichtslogikeinheit zu einer Absichtslogikbibliothek.

## Revendications

1. Appareil comprenant au moins un processeur et au moins une mémoire comportant un code de programme informatique, la au moins une mémoire et le code de programme informatique étant configurés pour, avec le au moins un processeur, amener l'appareil à réaliser au moins ce qui suit :
pour une intention à exécuter, acquérir au moins une unité logique d'intention parmi une pluralité d'unités logiques d'intention, dans lequel l'intention concerne la commande de réseaux de communication, et dans lequel les unités logiques d'intention comprennent des séquences logiques ou d'instruction à exécuter pour réaliser des intentions concernant la commande des réseaux de communication ;
planifier l'exécution de la au moins une unité logique d'intention pour activer des actions selon la au moins une unité logique d'intention sur les réseaux de communication, et
l'appareil étant **caractérisé en ce que** : dans lequel la au moins une mémoire et le code de programme informatique sont configurés pour, avec le au moins un processeur, amener l'appareil à réaliser en outre ce qui suit :
pour l'intention à exécuter, acquérir deux unités logiques d'intention ou plus parmi la pluralité d'unités logiques d'intention, et combiner les deux unités logiques d'intention ou plus en une autre unité logique d'intention comprenant des séquences logiques ou d'instruction à exécuter pour réaliser l'intention ;
dans lequel l'exécution de la planification comprend les étapes suivantes :
planifier l'exécution de l'autre unité logique d'intention pour activer l'autre unité logique d'intention sur les réseaux de communication ;
vérifier si l'intention a été satisfaite par son exécution ; et
dans le cas où l'intention est satisfaite, ajouter l'autre unité logique d'intention à une bibliothèque de logiques d'intention (134).

2. Appareil selon la revendication 1, dans lequel une unité logique d'intention de la pluralité d'unités logiques d'intention est une enveloppe autour de séquences logiques ou d'instruction requises à exécuter pour réaliser une intention spécifique concernant la commande des réseaux de communication.

3. Appareil selon la revendication 2, dans lequel l'unité logique d'intention comprend les séquences logiques ou d'instruction à exécuter et comprend en outre au moins un parmi un identifiant, un nom et une description qui est compréhensible par un utilisateur.

4. Appareil selon l'une des revendications 1 à 3, l'exécution de la planification comprenant :
l'exécution immédiate de la au moins une unité logique d'intention, ou
l'exécution de la au moins une unité logique d'intention à un moment ultérieur.

5. Appareil selon l'une des revendications 1 à 4, l'acquisition comprenant :
la recherche de la bibliothèque de logiques d'intention stockant la pluralité d'unités logiques d'intention pour trouver la au moins une unité logique d'intention comprenant des séquences logiques ou d'instruction à exécuter pour réaliser l'intention.

6. Appareil selon la revendication 5, dans lequel la au moins une mémoire et le code de programme informatique sont configurés pour, avec le au moins un processeur, amener l'appareil à réaliser en outre ce qui suit :
vérifier si l'intention a été satisfaite par son exécution ; et
dans le cas où l'intention n'est pas satisfaite, supprimer la au moins une unité logique d'intention de la bibliothèque de logiques d'intention.

7. Appareil selon l'une des revendications 1 à 6, dans lequel l'appareil comprend une plate-forme d'exécution de logique d'intention (133).

8. Appareil selon l'une des revendications 1 à 7, dans lequel
au moins certaines de la pluralité d'unités logiques d'intention sont des unités logiques d'intention écrites manuellement, et/ou
au moins certaines de la pluralité d'unités logiques d'intention sont des unités logiques d'intention apprises.

9. Appareil selon l'une des revendications 1 à 8, dans lequel
l'acquisition comprend l'envoi d'au moins un message à un utilisateur ; et/ou
l'exécution de la planification comprend l'envoi et/ou la réception d'au moins un message vers/depuis les réseaux de communication.

10. Appareil selon la revendication 9, dans lequel
le au moins un message envoyé à l'utilisateur indique que l'intention à exécuter est incomplète ou incorrecte, et/ou
le au moins un message envoyé à l'utilisateur indique le succès ou l'échec de l'exécution de l'intention, et/ou
le au moins un message envoyé à l'utilisateur indique l'échec de l'exécution de l'intention comportant une raison de l'échec, et/ou
le au moins un message envoyé aux réseaux de communication provoque l'exécution des actions selon la au moins une unité logique d'intention sur les réseaux de communication, et/ou
le au moins un message reçu des réseaux de communication indique le succès ou l'échec de l'exécution de l'intention, et/ou
le au moins un message reçu des réseaux de communication indique l'échec de l'exécution de l'intention comportant une raison de l'échec.

11. Appareil selon l'une des revendications 1 à 10, dans lequel l'intention est spécifiée à l'aide d'une syntaxe qui comprend au moins un objet de commande des réseaux de communication et un verbe qui indique quelle action à effectuer avec l'objet de commande.

12. Appareil selon la revendication 11, dans lequel la syntaxe comprend en outre au moins un parmi : un contexte et un ou plusieurs paramètres, dans lequel le contexte et les et un ou plusieurs paramètres indiquent avec quels paramètres et dans quelles conditions l'action doit être effectuée.

13. Procédé comprenant les étapes suivantes :
pour une intention à exécuter, acquérir (S201) au moins une unité logique d'intention parmi une pluralité d'unités logiques d'intention, dans lequel l'intention concerne la commande de réseaux de communication, et dans lequel les unités logiques d'intention comprennent des séquences logiques ou d'instruction à exécuter pour réaliser des intentions concernant la commande des réseaux de communication ;
planifier (S203) l'exécution de la au moins une unité logique d'intention pour activer des actions selon la au moins une unité logique d'intention sur les réseaux de communication, et
le procédé étant **caractérisé en ce que** : le procédé comprend en outre les étapes suivantes :
pour l'intention à exécuter, acquérir deux unités logiques d'intention ou plus parmi la pluralité d'unités logiques d'intention, et combiner les deux unités logiques d'intention ou plus en une autre unité logique d'intention comprenant des séquences logiques ou d'instruction à exécuter pour réaliser l'intention,
dans lequel l'exécution de la planification comprend les étapes suivantes :
planifier l'exécution de l'autre unité logique d'intention pour activer l'autre unité logique d'intention sur les réseaux de communication ;
vérifier si l'intention a été satisfaite par son exécution ; et
dans le cas où l'intention est satisfaite, ajouter l'autre unité logique d'intention à une bibliothèque de logiques d'intention.
